# EUROPEAN PATENT SPECIFICATION

(11) **EP 2 498 322 B1**
(45) Date of publication and mention of the grant of the patent: **10.08.2016**
(21) Application number: 12156245.8
(22) Date of filing: 20.02.2012
(51) Int. Cl.: H01M 2/20, H01M 2/22, H01M 10/42

(54) **Secondary battery**
Sekundärbatterie
Batterie secondaire

(30) Priority: 11.03.2011 US 201161451838 P; 03.10.2011 US 201113251921
(43) Date of publication of application: 12.09.2012
(73) Proprietor: Samsung SDI Co., Ltd., Giheung-gu Yongin-si, Gyeonggi-do 17084 (KR)
(72) Inventor: Jang, Youngcheol, Gyeonggi-do (KR)
(74) Representative: Walaski, Jan Filip

(56) References cited:
- EP-A2- 2 166 595
- EP-A2- 2 264 812
- US-A1- 2007 298 287
- US-A1- 2010 136 422

## Description

The present invention relates to a secondary battery.

A secondary battery may include a bare cell and a protective circuit module coupled to the bare cell. The bare cell may include an electrode assembly having a positive electrode plate, a negative electrode plate and a separator, a can accommodating the electrode assembly and a cap assembly sealing the topside of the can. The protective circuit module may include a charge/discharge device and a protective circuit device.

Since protective circuit devices are disposed on the bottom surface of the protective circuit module, a gap is necessary between the protective circuit module and the bare cell. Therefore, the protective circuit module is supported at the top side of the bare cell by additional connectors. The connectors have a bent shape and are electrically conductive to electrically connect the bare cell and the protective circuit module.

US2007298287 discloses a circuit board device that includes a substrate having a notch at one end thereof, plural electrical parts mounted on an upper surface of the substrate, a resin portion burying the electrical parts, a metal plate arranged at an end portion of the upper surface of the substrate to cover the notch, and a lead connected to the metal plate and extending from the end of the substrate to the outside. One end of the lead is fit into the notch and is welded to a back side of the metal plate for connection to the metal plate.

Embodiments of the present invention provides a secondary battery including planar first and second connectors to reduce a coupling height between a bare cell and a protective circuit module and thus to increase the capacity of the secondary battery by allowing the size of the secondary battery to be increased by as much as the reduced coupling height.

According to the invention, there is provided a secondary battery comprising a bare cell including an electrode terminal, a protection circuit module PCM mounted to the bare cell, the PCM comprising a protection circuit board PCB and a first planar connector between the bare cell and the PCB at a first end of the PCB for electrically connecting the PCM to the bare cell in accordance with the features of claim 1.

The secondary battery may further comprise a second planar connector between the bare cell and the PCB at a second end of the PCB opposite the first end, wherein the second planar connector is arranged to electrically connect the PCM to the bare cell or comprises a dummy connector having substantially the same thickness as the first planar connector.

The secondary battery may further comprise a third connector for connecting the electrode terminal to the PCM.

The PCB may comprise a first through hole through which the third connector connects the electrode terminal to a top surface of the PCB.

The electrode terminal may at least partially protrude into the first through hole.

The electrode terminal may protrude through the first through hole so as to be flush with a top surface of the PCB, and the third connector may comprise a planar connector extending across the top surface of the electrode terminal and the top surface of the PCB.

The third connector may comprise a first planar tab connected to the top surface of the PCB, a second planar tab connected to the electrode terminal and a connecting portion between the first and second tabs connecting the first and second tabs to one another.

The first and second tabs may extend in opposite directions with respect to the connecting portion.

A part of the third connector that connects to the PCB may be wider than a part that connects to the electrode terminal.

The bare cell may include an electrolyte injection hole and a plug sealing the electrolyte injection hole, wherein the PCB includes a recess for accommodating the plug.

The bare cell may include an electrolyte injection hole and a plug sealing the electrolyte injection hole, and the PCB may include a second through-hole for accomodating the plug.

The secondary battery may further comprise an insulating member in the second through hole for insulating the plug from external terminals disposed on a top surface of the PCB above the second through hole.

The external terminals may be housed in a terminal block that is disposed above the second through hole, the terminal block further including a PTC element.

The PCM includes protection circuit devices for controlling charging and discharging of the battery mounted to a top surface of the PCB.

The bare cell may include an electrode assembly, a cap plate connected to the electrode assembly and an insulating film between the cap plate and the PCB, wherein the insulating film includes a third through hole through which the electrode terminal protrudes.

Embodiments of the invention will now be described by way of example with reference to the accompanying drawings, in which:
FIG. 1 is an exploded perspective view illustrating a secondary battery according to an embodiment;
FIG. 2 is a partial side view illustrating the secondary battery according to the embodiment;
FIG. 3 is a partial enlarged perspective view illustrating a protective circuit module including a third lead plate in the secondary battery of the embodiment;
FIG. 4 is a partial enlarged perspective view illustrating a bare cell and the protective circuit module including an electrolyte injection hole plug receiving part in the secondary battery of the embodiment; and
FIG. 5 is an enlarged perspective view illustrating a third lead plate of a secondary battery according to another embodiment.

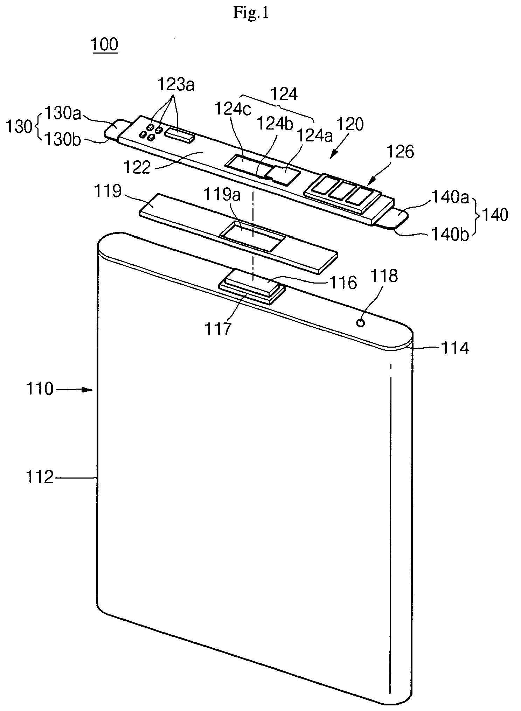

As shown in FIG. 1, a secondary battery 100 of the current embodiment includes a bare cell 110, a protective circuit module 120, a first lead plate, or first connector, 130, and a second lead plate, or second connector, 140. In addition, the secondary battery 100 may further include a third lead plate, or third connector, 124.

The bare cell 110 includes an electrode assembly (not shown), a can 112, a cap plate 114, an electrode terminal 116, a gasket 117, an electrolyte injection hole plug 118, and an insulation film 119.

The electrode assembly (not shown) includes a positive electrode plate, a negative electrode plate, and a separator disposed between the positive and negative electrode plates.

The can 112 may have a rectangular shape or an elliptical shape with rounded corners. The can 112 may be formed of a metal material. For example, the can 112 may be formed of a light ductile metal such as aluminium and an aluminium alloy. The can 112 may be formed of aluminium or an aluminium alloy by a method such as a deep drawing method. The can 112 provides a space in which the electrode assembly (not shown) and electrolyte can be accommodated. The can 112 is electrically connected to a positive tab of the electrode assembly (not shown) so that the can 112 can function as a positive terminal.

The cap plate 114 has an approximately rectangular shape and a size corresponding to an upper opening of the can 112. An insulation plate (not shown) and a terminal plate (not shown) are disposed on the bottom surface of the cap plate 114. Like the can 112, the cap plate 114 may be formed of an electrically conductive metal material such as aluminium or an aluminium alloy. In this case, the cap plate 114 may be well coupled to the can 112 by welding. The cap plate 114 is welded to the upper opening of the can 112 for sealing the can 112. The cap plate 114 may function as a positive electrode or a negative electrode. In the current embodiment, the positive tab of the electrode assembly (not shown) is electrically connected to the cap plate 114 so that the cap plate 114 may function as a positive terminal.

The electrode terminal 116 is disposed at a centre part of the cap plate 114. The electrode terminal 116 is electrically connected to a negative tab of the electrode assembly (not shown), and thus the electrode terminal 116 functions as a negative terminal.

In the current embodiment, the cap plate 114 functions as a positive terminal, and the electrode terminal 116 functions as a negative terminal. However, the current embodiment is not limited thereto.

The gasket 117 is disposed between the electrode terminal 116 and the cap plate 114 for electrically insulating the electrode terminal 116 and the cap plate 114 from each other.

The electrolyte injection hole plug 118 is provided to close an electrolyte injection hole after electrolyte is injected into the can 112 through the electrolyte injection hole. The electrolyte injection hole plug 118 is provided at a side of the cap plate 114. The electrolyte injection hole plug 118 has a circular shape and predetermined size.

The insulation film 119 has a plate shape. The insulation film 119 is disposed between a printed circuit board 122 and the cap plate 114 and is shorter than the printed circuit board 122. The insulation film 119 includes a terminal through hole 119a at a position corresponding to the electrode terminal 116 and the gasket 117. The terminal through hole 119a has a rectangular shape such that the electrode terminal 116 and the gasket 117 can protrude therethrough.

The protective circuit module 120 includes the printed circuit board 122, also referred to as a main printed circuit board, protective circuit devices 123, the third lead plate 124, a receiving part or through hole 125, and a printed circuit board terminal block 126.

The protective circuit module 120 is disposed above the bare cell 110 and electrically connected to the bare cell 110. The protective circuit module 120 includes the protective circuit devices 123 to control charging and discharging of the bare cell 110. The protective circuit module 120 prevents overcharging and overdischarging of the bare cell 110.

The printed circuit board 122 has a plate shape. The protective circuit devices 123, the third lead plate 124, and the printed circuit board terminal block 126 are disposed at the top side of the printed circuit board 122.

An auxiliary hole 122a is formed in a side of the printed circuit board 122. That is, the auxiliary hole 122a is disposed between the third lead plate 124 and the second lead plate 140. The auxiliary hole 122a may have a shape such as circular, elliptical, and rectangular shapes. For example, the auxiliary hole 122a may have a circular shape. Electrolyte is not directly injected through the auxiliary hole 122a. The auxiliary hole 122a has a size corresponding to the size of a protruding part of the electrolyte injection hole plug 118 to accommodate the protruding part of the electrolyte injection hole plug 118. Therefore, a gap between the protective circuit module 120 and the cap plate 114 can be reduced owing to the auxiliary hole 122a.

The auxiliary hole 122a may be formed in a groove shape by recessing a surface of the printed circuit board 122 or as a through hole. If the auxiliary hole 122a is a through hole, an additional insulation member 127 may be disposed in the through hole between the electrolyte injection hole plug 118 and the external terminal 126c for insulation between the electrolyte injection hole plug 118 and the external terminal 126c. In addition, since the printed circuit board terminal block 126 is disposed on the top side of the auxiliary hole 122a, electrolyte may be prevented from leaking through the auxiliary hole 122a.

The protective circuit devices 123 are disposed on the top side of the printed circuit board 122. That is, the protective circuit devices 123 are disposed between the third lead plate 124 and the first lead plate 130. The protective circuit devices 123 make the charging state of the bare cell 110 uniform or prevent overcharging and overdischarging of the bare cell 110.

The third lead plate 124 includes a first tab 124a, a connection part 124b, and a second tab 124c. The third lead plate 124 is disposed approximately at a centre part of the printed circuit board 122. At least a part of the third lead plate 124 is disposed at the top surface of the printed circuit board 122. The first tab 124a is electrically connected to the top surface of the printed circuit board 122, the second tab 124c is electrically connected to the electrode terminal 116, and the connection part 124b connects the first tab 124a and the second tab 124c.

The first tab 124a extends from the upper end of the connection part 124b, and the second tab 124c extends from the lower end of the connection part 124b in a direction away from the first tab 124a.

The first tab 124a may have an area greater than that of the second tab 124c electrically connected to the electrode terminal 116 for stable electric connection with the protective circuit module 120.

The receiving part or through hole 125 is disposed approximately at a centre part of the printed circuit board 122. The receiving part 125 has an approximately rectangular hole shape. The receiving part 125 has a size and depth such that at least a part of the electrode terminal 116 can be inserted in the receiving part 125. The second tab 124c of the third lead plate 124 is inserted in the receiving part 125. Therefore, since the second tab 124c of the third lead plate 124 can be accommodated in the receiving part 125, the distance between the printed circuit board 122 and the cap plate 114 can be reduced.

The printed circuit board terminal block 126 includes a printed circuit board 126a, a positive temperature coefficient (PTC) thermistor 126b, and external terminals 126c.

The printed circuit board terminal block 126 has an approximately rectangular shape and is disposed between the third lead plate 124 and the second lead plate 140. The printed circuit board terminal block 126 covers the auxiliary hole 122a. That is, since the auxiliary hole 122a is covered with the printed circuit board terminal block 126, electrolyte may not leak through the auxiliary hole 122a.

The terminal block printed circuit board 126a has an approximately rectangular shape and is disposed on the top surface of the main printed circuit board 122. The terminal block printed circuit board 126a accommodates the PTC thermistor 126b and is electrically connected to the main printed circuit board 122.

The PTC thermistor 126b is disposed in the terminal block printed circuit board 126a and is electrically connected to the main printed circuit board 122 and the external terminals 126c. If the secondary battery 100 is heated to a preset temperature or higher due to an overcurrent or overvoltage, the PTC thermistor 126b cuts off the current to protect the secondary battery 100 from overheating.

The external terminals 126c are disposed at a side of the top surface of the printed circuit board 122. The external terminals 126c are used to electrically connect the main printed circuit board 122 to an external electronic device (not shown).

The first lead plate 130 may have a planar plate shape extending from the main printed circuit board 122. The first lead plate 130 includes a planar first surface 130a and a planar second surface 130b at an opposite side to the first surface 130a. The first surface 130a is electrically connected to the protective circuit module 120, and the planar second surface 130b is electrically connected to the cap plate 114. Since the first lead plate 130 is planar, a coupling height between the cap plate 114 and the protective circuit module 120 can be reduced. The first lead plate 130 may be formed of nickel. The first lead plate 130 is coupled to the bottom surface of the other side of the protective circuit module 120 and is electrically connected to a positive electrode line pattern (not shown) of the protective circuit module 120. In addition, the first lead plate 130 extends to the top surface of the bare cell 110 to electrically connect the bare cell 110 and the protective circuit module 120. The first lead plate 130 may be connected to the protective circuit module 120 and the bare cell 110 more securely by welding such as laser welding.

The second lead plate 140 is disposed on the bottom surface of the side of the printed circuit board 122 and coupled to the protective circuit module 120. The first lead plate 130 and the second lead plate 140 are symmetrical. The second lead plate 140 has a planar first surface 140a and a planar second surface 140b at an opposite side to the first surface 140a. The first surface 140a is electrically connected to the protective circuit module 120, and the planar second surface 140b is electrically connected to the cap plate 114. Since the second lead plate 140 is planar, the coupling height between the cap plate 114 and the protective circuit module 120 can be reduced.

The second lead plate 140 may function as a positive electrode lead plate like the first lead plate 130. Alternatively, the second lead plate 140 may be a dummy lead plate having a structure corresponding to the first lead plate 130. If the second lead plate 140 is a dummy lead plate, the second lead plate 140 is used to keep the gap between the bare cell 110 and the protective circuit module 120 but is not used to electrically connect the bare cell 110 and the protective circuit module 120. The second lead plate 140 may improve coupling stability between the bare cell 110 and the protective circuit module 120.

Regardless of whether the second lead plate 140 is a positive electrode lead plate or a dummy lead plate, the second lead plate 140 may have the same shape, size, material, and structure as the first lead plate 130. Owing to the second lead plate 140 and the first lead plate 130, the protective circuit module 120 disposed above the bare cell 110 can be horizontally maintained, ie. maintained with an even spacing above the bare cell. In some cases, only the first lead plate 130 may be provided at the side of the protective circuit module 120. That is, the second lead plate 140 may be omitted. Although the second lead plate 140 is omitted, the secondary battery 100 does not deteriorate because the protective circuit module 120 may be coupled to the protective circuit module 120 via the first and third lead plates 130 and 124.

Since, in one embodiment, both the first lead plate 130 and the second lead plate 140 are disposed between the protective circuit module 120 and the cap plate 114 are planar, a gap or space between the protective circuit module 120 and the cap plate 114 can be minimized to reduce the coupling height between the protective circuit module 120 and the cap plate 114.

Hereinafter, an explanation will be given of a secondary battery according to another embodiment.

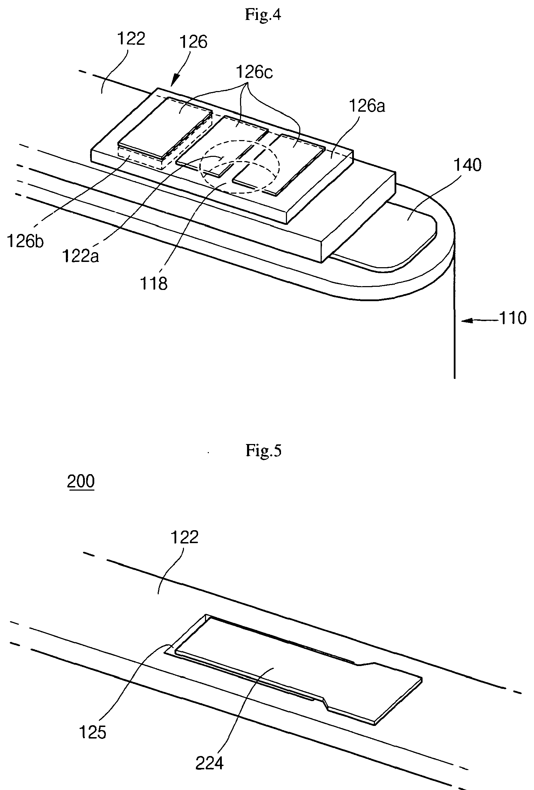

FIG. 5 is an enlarged perspective view illustrating a third lead plate of a secondary battery according to another embodiment.

A secondary battery 200 of the current embodiment includes a bare cell 110, a protective circuit module 120, a third lead plate, or third connector, 224, a first lead plate 130, and a second lead plate 140.

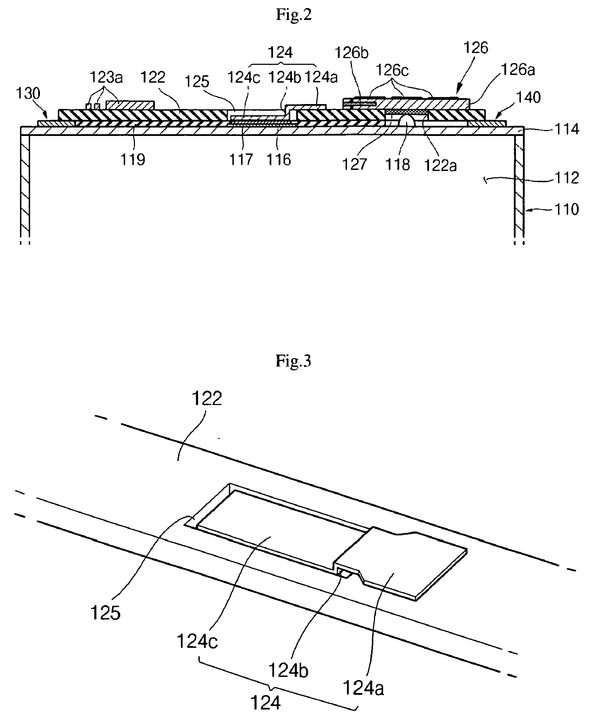

Only the third lead plate 224 of the secondary battery 200 of the current embodiment is different from the third lead plate 124 of the secondary battery 100 of the previous embodiments described with reference to FIGS. 1 to 3. Therefore, the third lead plate 224 will now be mainly described. The bare cell 110, the protective circuit module 120, the first lead plate 130, and the second lead plate 140 of the secondary battery 200 of the current embodiment are that same as those of the secondary battery 100 of the previous embodiments explained with reference to FIGS. 1 to 3. Thus, these elements are denoted by the same reference numerals, and detailed descriptions thereof are not repeated.

The third lead plate 224 of the current embodiment may have a planar plate shape as shown in FIG. 5. The third lead plate 224 is disposed in a receiving part 125. As the height of an electrode terminal 116 is increased, the third lead plate 224 is formed in a planar plate shape.

According to certain embodiments, since the first and second lead plates of the secondary battery are planar, a coupling height between the bare cell and the protective circuit module can be reduced, and thus the capacity of the secondary battery can be increased by increasing the size of the secondary battery by as much as the reduced coupling height.

## Claims

1. A secondary battery (100, 200) comprising:
a bare cell (110) including an electrode terminal (116), an electrode assembly, and a cap plate (114) connected to the electrode assembly, the cap plate being arranged to function as an opposite terminal of the bare cell (110) to the electrode terminal (116) and having a surface facing away from the electrode assembly;
a protection circuit module PCM (120) mounted to the cap plate (114), the PCM comprising a protection circuit board PCB (122) having a surface facing the cap plate; and
a first planar connector (130) coupled to the surface of the cap plate (114) facing away from the electrode assembly and to the surface of the PCB (122) facing the cap plate at a first end of the PCB for electrically connecting the PCM (120) to the cap plate (114); and
a PCM connector (124, 224) for connecting the electrode terminal (116) to the PCM (120).

2. The secondary battery of claim 1, further comprising:
a second planar connector (140) between the bare cell (110) and the PCB (122) at a second end of the PCB opposite the first end, wherein the second planar connector (140) is arranged to electrically connect the PCM (120) to the bare cell (110) or comprises a dummy connector having substantially the same thickness as the first planar connector.

3. The secondary battery of claim 1, wherein the PCB (122) comprises a first through hole (125) through which the PCM connector (124, 224) connects the electrode terminal (116) to a top surface of the PCB (122).

4. The secondary battery of claim 3, wherein the electrode terminal (116) at least partially protrudes into the first through hole (125).

5. The secondary battery of claim 3 or 4, wherein the electrode terminal (116) protrudes through the first through hole (125) so as to be flush with a top surface of the PCB (122), and the PCM connector (224) comprises a planar connector extending across the top surface of the electrode terminal (116) and the top surface of the PCB (122).

6. The secondary battery of claim 3 or 4, wherein the PCM connector (124) comprises a first planar tab (124a) connected to the top surface of the PCB (122), a second planar tab (124c) connected to the electrode terminal (116) and a connecting portion (124b) between the first and second tabs connecting the first and second tabs to one another.

7. The secondary battery of claim 6, wherein the first and second tabs (124a, 124c) extend in opposite directions with respect to the connecting portion (124b).

8. The secondary battery of any of the preceding claims, wherein a part (124a) of the third connector (124, 224) that connects to the PCB (122) is wider than a part (124c) that connects to the electrode terminal (116).

9. The secondary battery of any one of the preceding claims, wherein the bare cell (110) includes an electrolyte injection hole and a plug (118) sealing the electrolyte injection hole, wherein the PCB (122) includes a recess (122a) for accommodating the plug.

10. The secondary battery of any one of claims 1 to 8, wherein the bare cell (110) includes an electrolyte injection hole and a plug (118) sealing the electrolyte injection hole, wherein the PCB (122) includes a second through-hole (122a) for accomodating the plug.

11. The secondary battery of claim 10, further comprising an insulating member in the second through hole (122a) for insulating the plug (118) from external terminals (126c) disposed on a top surface of the PCB (122) above the second through hole.

12. The secondary battery of claim 10 or 11, comprising a terminal block 126 that houses the external terminals (126c) disposed above the second through hole, the terminal block further including a PTC element (126b).

13. The secondary battery of any one of the preceding claims, wherein the PCM (120) includes protection circuit devices (123a) for controlling charging and discharging of the battery mounted to a top surface of the PCB (122).

14. The secondary battery of any one of the preceding claims, wherein the bare cell includes:
an insulating film (119) between the cap plate (114) and the PCB (122), wherein the insulating film includes a third through hole (119a) through which the electrode terminal (116) protrudes.

## Patentansprüche

1. Sekundärbatterie (100, 200), umfassend:
eine Rohzelle (110), die einen Elektrodenanschluss (116), eine Elektrodenanordnung und eine mit der Elektrodenanordnung verbundene Kappenplatte (114) beinhaltet, wobei die Kappenplatte angeordnet ist, um als ein gegenüberliegender Anschluss der Rohzelle (110) mit dem Elektrodenanschluss (116) zu fungieren, und eine von der Elektrodenanordnung abgewandte Oberfläche aufweist;
ein an der Kappenplatte (114) angebrachtes Schutzschaltungsmodul PCM (120), wobei das PCM eine Schutzschaltungsplatte PCB (122) mit einer der Kappenplatte zugewandten Oberfläche umfasst; und
einen ersten planaren Verbinder (130), der mit der von der Elektrodenanordnung abgewandten Oberfläche der Kappenplatte (114) und mit der der Kappenplatte zugewandten Oberfläche der PCB (122) an einem ersten Ende der PCB zur elektrischen Verbindung des PCM (120) mit der Kappenplatte (114) gekoppelt ist und
einen PCM-Verbinder (124, 224) zur Verbindung des Elektrodenanschlusses (116) mit dem PCM (120).

2. Sekundärbatterie nach Anspruch 1, ferner umfassend:
einen zweiten planaren Verbinder (140) zwischen der Rohzelle (110) und der PCB (122) an einem dem ersten Ende gegenüberliegenden zweiten Ende der PCB, wobei der zweite planare Verbinder (140) angeordnet ist, um das PCM (120) mit der Rohzelle (110) elektrisch zu verbinden, oder einen Blindverbinder umfasst, der im Wesentlichen dieselbe Dicke wie der erste planare Verbinder aufweist.

3. Sekundärbatterie nach Anspruch 1, wobei das PCB (122) ein erstes Durchgangsloch (125) umfasst, durch das der PCM-Verbinder (124, 224) den Elektrodenanschluss (116) mit einer oberen Oberfläche der PCB (122) verbindet.

4. Sekundärbatterie nach Anspruch 3, wobei der Elektrodenanschluss (116) zumindest teilweise in das erste Durchgangsloch (125) ragt.

5. Sekundärbatterie nach Anspruch 3 oder 4, wobei der Elektrodenanschluss (116) durch das erste Durchgangsloch (125) ragt, um mit einer oberen Oberfläche der PCB (122) bündig abzuschließen, und der PCM-Verbinder (224) einen planaren Verbinder umfasst, der sich durch die obere Oberfläche des Elektrodenanschlusses (116) und die obere Oberfläche der PCB (122) erstreckt.

6. Sekundärbatterie nach Anspruch 3 oder 4, wobei der PCM-Verbinder (124) einen ersten ebenen Streifen (124a), der mit der oberen Oberfläche der PCB (122) verbunden ist, einen zweiten ebenen Streifen (124c), der mit dem Elektrodenanschluss (116) verbunden ist, und einen Verbindungsabschnitt (124b) zwischen dem ersten und dem zweiten Streifen zum Verbinden des ersten und des zweiten Streifens miteinander umfasst.

7. Sekundärbatterie nach Anspruch 6, wobei sich der erste und der zweite Streifen (124a, 124c) in entgegengesetzte Richtungen in Bezug auf den Verbindungsabschnitt (124b) erstrecken.

8. Sekundärbatterie nach einem der vorangehenden Ansprüche, wobei ein Teil (124a) des dritten Verbinders (124, 224), der mit der PCB (122) verbunden ist, breiter ist als ein Teil (124c), der mit dem Elektrodenanschluss (116) verbunden ist.

9. Sekundärbatterie nach einem der vorangehenden Ansprüche, wobei die Rohzelle (110) ein Elektrolytinjektionsloch und einen das Elektrolytinjektionsloch abdichtenden Stopfen (118) beinhaltet, wobei die PCB (122) eine Aussparung (122a) zur Aufnahme des Stopfens beinhaltet.

10. Sekundärbatterie nach einem der Anspruche 1 bis 8, wobei die Rohzelle (110) ein Elektrolytinjektionsloch und einen das Elektrolytinjektionsloch abdichtenden Stopfen (118) beinhaltet, wobei die PCB (122) ein zweites Durchgangsloch (122a) zur Aufnahme des Stopfens umfasst.

11. Sekundärbatterie nach Anspruch 10, ferner umfassend ein Isolierbauteil im zweiten Durchgangsloch (122a) zum Isolieren des Stopfens (118) von äußeren Anschlüssen (126c), die auf einer oberen Oberfläche der PCB (122) über dem zweiten Durchgangsloch angeordnet sind.

12. Sekundärbatterie nach Anspruch 10 oder 11, umfassend einen Anschlussblock 126, der die äußeren Anschlüsse (126c), die über dem zweiten Durchgangsloch angeordnet sind, aufnimmt, wobei der Anschlussblock ferner ein PTC-Element (126b) beinhaltet.

13. Sekundärbatterie nach einem der vorangehenden Ansprüche, wobei das PCM (120) Schutzschaltungsvorrichtungen (123a) zum Steuern des Ladens und Entladens der auf einer oberen Oberfläche der PCB (122) angebrachten Batterie beinhaltet.

14. Sekundärbatterie nach einem der vorangehenden Ansprüche, wobei die Rohzelle Folgendes beinhaltet:
eine Isolierfolie (119) zwischen der Kappenplatte (114) und der PCB (122), wobei die Isolierfolie ein drittes Durchgangsloch (119a) beinhaltet, durch das der Elektrodenanschluss (116) ragt.

## Revendications

1. Batterie secondaire (100, 200) comprenant :
une cellule nue (110) comportant une borne d'électrode (116), un ensemble d'électrodes, et une plaque de capuchon (114) reliée à l'ensemble d'électrodes, la plaque de capuchon étant agencée pour fonctionner en tant que borne opposée de la cellule nue (110) à la borne d'électrode (116) et ayant une surface en regard de l'ensemble d'électrodes ;
un module de circuit de protection PCM (120) monté sur la plaque de capuchon (114), le PCM comprenant une carte de circuit de protection PCB (122) ayant une surface faisant face à la plaque de capuchon ; et
un premier connecteur plan (130) couplé à la surface de la plaque de capuchon (114) en regard de l'ensemble d'électrodes et à la surface de la PCB (122) faisant face à la plaque de capuchon au niveau d'une première extrémité de la PCB pour relier électriquement le PCM (120) à la plaque de capuchon (114) ; et
un connecteur de PCM (124, 224) pour relier la borne d'électrode (116) au PCM (120).

2. Batterie secondaire de la revendication 1, comprenant en outre :
un deuxième connecteur plan (140) entre la cellule nue (110) et la PCB (122) au niveau d'une deuxième extrémité de la PCB opposée à la première extrémité, où le deuxième connecteur plan (140) est agencé pour relier électriquement le PCM (120) à la cellule nue (110) ou comprend un connecteur factice ayant essentiellement la même épaisseur que le premier connecteur plan.

3. Batterie secondaire de la revendication 1, dans laquelle la PCB (122) comprend un premier trou traversant (125) à travers lequel le connecteur de PCM (124, 224) relie la borne d'électrode (116) à une surface supérieure de la PCB (122).

4. Batterie secondaire de la revendication 3, dans laquelle la borne d'électrode (116) fait saillie au moins partiellement dans le premier trou traversant (125).

5. Batterie secondaire de la revendication 3 ou 4, dans laquelle la borne d'électrode (116) fait saillie à travers le premier trou traversant (125) de manière à affleurer une surface supérieure de la PCB (122), et le connecteur de PCM (224) comprend un connecteur plan s'étendant à travers la surface supérieure de la borne d'électrode (116) et la surface supérieure de la PCB (122).

6. Batterie secondaire de la revendication 3 ou 4, dans laquelle le connecteur de PCM (124) comprend une première languette plane (124a) reliée à la surface supérieure de la PCB (122), une deuxième languette plane (124c) reliée à la borne d'électrode (116) et une partie de connexion (124b) entre les première et deuxième languettes reliant les première et deuxième languettes l'une à l'autre.

7. Batterie secondaire de la revendication 6, dans laquelle les première et deuxième languettes (124a, 124c) s'étendent dans des directions opposées par rapport à la partie de connexion (124b).

8. Batterie secondaire de l'une des revendications précédentes, dans laquelle une partie (124a) du troisième connecteur (124, 224) qui se relie à la PCB (122) est plus large qu'une partie (124c) qui se relie à la borne d'électrode (116).

9. Batterie secondaire de l'une quelconque des revendications précédentes, dans laquelle la cellule nue (110) comporte un trou d'injection d'électrolyte et un bouchon (118) scellant l'orifice d'injection d'électrolyte, où la PCB (122) comporte un évidement (122a) pour accueillir le bouchon.

10. Batterie secondaire de l'une quelconque des revendications 1 à 8, dans laquelle la cellule nue (110) comporte un trou d'injection d'électrolyte et un bouchon (118) scellant l'orifice d'injection d'électrolyte, où la PCB (122) comporte un deuxième trou traversant (122a) pour accueillir le bouchon.

11. Batterie secondaire de la revendication 10, comprenant en outre un élément d'isolation dans le deuxième trou traversant (122a) pour isoler le bouchon (118) des bornes externes (126c) disposées sur une surface supérieure de la PCB (122) au-dessus du deuxième trou traversant.

12. Batterie secondaire de la revendication 10 ou 11, comprenant un bornier 126 qui reçoit les bornes externes (126c) disposées au-dessus du deuxième trou traversant, le bornier comportant en outre un élément PTC (126b).

13. Batterie secondaire de l'une quelconque des revendications précédentes, dans laquelle le PCM (120) comporte des dispositifs de circuit de protection (123a) pour commander la charge et la décharge de la batterie montée sur une surface supérieure de la PCB (122).

14. Batterie secondaire de l'une quelconque des revendications précédentes, dans laquelle la cellule nue comporte :
un film d'isolation (119) entre la plaque de capuchon (114) et la PCB (122), où le film d'isolation comporte un troisième trou traversant (119a) à travers lequel la borne d'électrode (116) fait saillie.
